# EUROPEAN PATENT SPECIFICATION

(11) **EP 3 501 231 B1**
(45) Date of publication and mention of the grant of the patent: **20.07.2022**
(21) Application number: 17843844.6
(22) Date of filing: 08.08.2017
(51) Int. Cl.: H04W 74/08, H04W 76/27

(54) **RANDOM ACCESS PROCEDURE SUPPORTING NB-IOT**
DIREKTZUGRIFFSVERFAHREN MIT UNTERSTÜTZUNG VON SCHMALBANDIGEM (NB) INTERNET DER DINGE (IOT)
PROCÉDURE D'ACCÈS ALÉATOIRE PRENANT EN CHARGE UN NB-IOT

(30) Priority: 20.08.2016 US 201662377582 P
(43) Date of publication of application: 26.06.2019
(73) Proprietor: LG Electronics Inc., Seoul 07336 (KR)
(72) Inventor: YI, Seungjune, Seoul 06772 (KR); LEE, Sunyoung, Seoul 06772 (KR); HONG, Jongwoo, Seoul 06772 (KR)
(74) Representative: Frenkel, Matthias Alexander
(86) International application number: PCT/KR2017/008526
(87) International publication number: WO 2018/038424

(56) References cited:
- WO-A1-2016/068644
- WO-A1-2016/122437
- KR-A- 20140 122 965
- KR-B1- 101 501 676
- US-A1- 2007 237 066
- ERICSSON: "Random Access on Non-Anchor Carriers in NB-IoT", 3GPP DRAFT; R2-165656 - RANDOM ACCESS ON NON-ANCHOR CARRIER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 13 August 2016 (2016-08-13), XP051134288, Retrieved from the Internet: URL:http://www.3gpp.org/ftp/tsg_ran/WG2_RL 2/TSGR2_95/Docs/ [retrieved on 2016-08-13]
- HUAWEI ET AL: "NPRACH on Non-anchor NB-IoT Carrier", 3GPP DRAFT; R2-165533 NPRACH ON NON-ANCHOR NB-IOT CARRIER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 13 August 2016 (2016-08-13), XP051134220, Retrieved from the Internet: URL:http://www.3gpp.org/ftp/tsg_ran/WG2_RL 2/TSGR2_95/Docs/ [retrieved on 2016-08-13]
- ZTE: "Consideration for PRACH on multi-carrier in NB-IoT", 3GPP DRAFT; R2-164859 CONSIDERATION FOR PRACH ON MULTI-CARRIER IN NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Gothenburg, Sweden; 20160822 - 20160826 13 August 2016 (2016-08-13), XP051134054, Retrieved from the Internet: URL:http://www.3gpp.org/ftp/tsg_ran/WG2_RL 2/TSGR2_95/Docs/ [retrieved on 2016-08-13]
- J. SCHLIENZ et al.: "Narrowband Internet of Things", ROHDE & SCHWARZ, 8 August 2016 (2016-08-08), pages 1-42, XP055448951,
- ESTI: "3GPP; TSGRAN; E-UTRA; Medium Access Control (MAC) protocol specification (Release 13)", 3GPP TS 36.321 V13.2.0, 1 August 2016 (2016-08-01), pages 1-7, XP055593283,

## Description

### Technical Field

The present invention relates to a method and a user equipment (UE) for performing a random access to a network.

### Background Art

As an example of a mobile communication system to which the present invention is applicable, a 3rd Generation Partnership Project Long Term Evolution (hereinafter, referred to as LTE) communication system is described in brief.

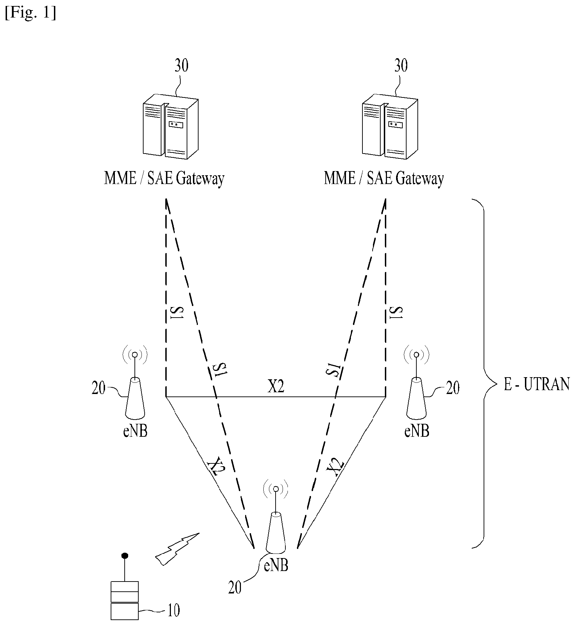

FIG. 1 is a block diagram illustrating network structure of an evolved universal mobile telecommunication system (E-UMTS). The E-UMTS may be also referred to as an LTE system. The communication network is widely deployed to provide a variety of communication services such as voice (VoIP) through IMS and packet data.

As illustrated in FIG. 1, the E-UMTS network includes an evolved UMTS terrestrial radio access network (E-UTRAN), an Evolved Packet Core (EPC) and one or more user equipment. The E-UTRAN may include one or more evolved NodeB (eNodeB) 20, and a plurality of user equipment (UE) 10 may be located in one cell. One or more E-UTRAN mobility management entity (MME)/system architecture evolution (SAE) gateways 30 may be positioned at the end of the network and connected to an external network.

As used herein, "downlink" refers to communication from eNodeB 20 to UE 10, and "uplink" refers to communication from the UE to an eNodeB. UE 10 refers to communication equipment carried by a user and may be also referred to as a mobile station (MS), a user terminal (UT), a subscriber station (SS) or a wireless device.

For uplink signal transmission, the UE has to consider the timing advance value.

As part of Release 13, 3GPP has specified a new radio interface, the Narrowband Internet of Things (NB-IoT). NB-IoT is optimized for machine type traffic. It is kept as simple as possible in order to reduce device costs and to minimize battery consumption. In addition, it is also adapted to work in difficult radio conditions, which is a frequent operational area for certain machine type communication devices. Although NB-IoT is an independent radio interface, it is tightly connected with LTE, which also shows up in its integration in the current LTE specifications.

NB-IoT technology occupies a frequency band of 180 kHz bandwidth, which corresponds to one resource block in LTE transmission. With this selection, the following operation modes are possible:

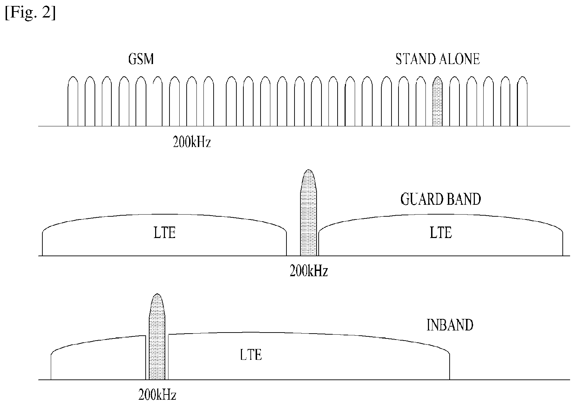

FIG. 2 shows 3 modes of operation for NB-IoT.

Stand alone operation. A possible scenario is the utilization of currently used GSM frequencies. With their bandwidth of 200 kHz there is still a guard interval of 10 kHz remaining on both sides of the spectrum.

Guard band operation, utilizing the unused resource blocks within an LTE carrier's guard-band.

In-band operation utilizing resource blocks within an LTE carrier.

These modes are visualized in the FIG. 2 in sequence.

In NB-IoT, a carrier selected for receiving NPSS (Narrowband Primary Synchronization Signal) and NSSS (Narrowband Secondary Synchronization Signal), as well as the NPBCH (Narrowband Physical Broadcast Channel) is called anchor carrier. But, the RRCConnectionReconfiguration may contain the settings for an additional carrier in UL and DL, the non-anchor carrier.

When a non-anchor carrier is provided in DL, the UE shall receive all data on this frequency. This excludes the synchronization, broadcast information and paging, which are only received on the anchor carrier. A bitmap may be provided indicating the allowed DL SFs. The non-anchor carrier may contain considerable more SFs for data, since it does not require synchronization and broadcast information.

Once the non-anchor carrier is configured, the UE solely listens to this one while it is in the RRC_CONNECTED state. Consequently the UE requires only one receiver chain.

In UL the same principle applies. If an additional UL carrier is configured, the UE only takes this one for data transmission, there is no simultaneous transmission in this carrier and the anchor carrier. For both, DL and UL, the UE returns to its anchor carrier when it is released to the RRC_IDLE state.

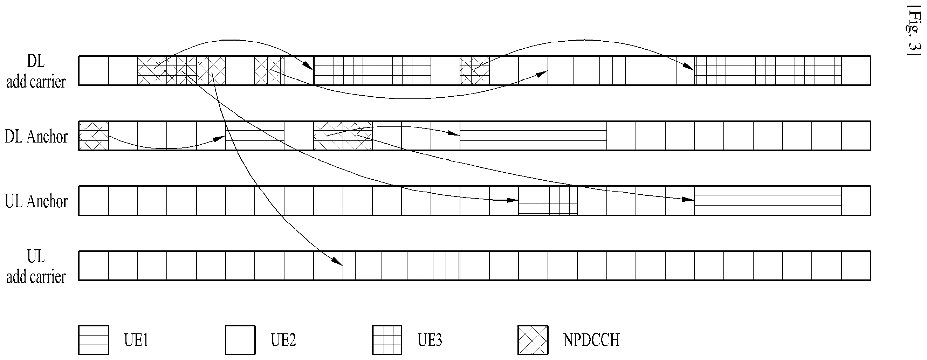

FIG. 3 shows an example of using multi-carrier in NB-IoT communication.

In the example of FIG. 3 assume that UE1 is configured with the anchor carrier, UE2 with other carrier in DL and UL, and UE3 with a different carrier only on DL. For simplicity, this diagram neither considers the NPDCCH period nor the SFs which are not allowed for DL data. It shall only be interpreted as exemplary.

In Release 13 NB-IoT, the UE can only perform random access on an anchor carrier. In specific, if the UE is configured with a non-anchor carrier, it is required to perform the Random Access procedure on the anchor carrier.

However, to achieve access and congestion control among the multiple carriers, some enhancements for the use of non-anchor carrier is discussed.

The document ("Random Access on Non-Anchor Carriers in NB-IoT", 3GPP DRAFT, R2-165656) discloses a random access procedure in relation to multi-carrier operation. In the document details on NB-IoT non-anchor carrier random access and proposal thereto are outlined.

WO 2016/068644 A1 relates to a random access procedure at a cell on an unlicensed carrier in a wireless communication system. In the document a user equipment (UE) is described to transmit a random access preamble, and receive a random access response including an index of a second cell, wherein a first cell is a first serving cell on a licensed carrier and the second cell is a second serving cell on the unlicensed carrier.

### Disclosure of Invention

### Technical Problem

An object of the present invention devised to solve the problem lies in the conventional mobile communication system. The technical problems solved by the present invention are not limited to the above technical problems and those skilled in the art may understand other technical problems from the following description.

### Solution to Problem

To achieve the object of the present invention, preferred embodiments of the present disclosure are provided as defined in the appended claims.

It is to be understood that both the foregoing general description and the following detailed description of the present invention are exemplary and explanatory and are intended to provide further explanation of the invention as claimed.

### Advantageous Effects of Invention

According to the present invention, the UE can perform the random access without any mismatch between the UE and the network.

It will be appreciated by persons skilled in the art that that the effects achieved by the present invention are not limited to what has been particularly described hereinabove and other advantages of the present invention will be more clearly understood from the following detailed description taken in conjunction with the accompanying drawings.

### Brief Description of Drawings

The accompanying drawings, which are included to provide a further understanding of the invention and are incorporated in and constitute a part of this application, illustrate embodiment(s) of the invention and together with the description serve to explain the principle of the invention.
FIG. 1 is a block diagram illustrating network structure of an evolved universal mobile telecommunication system (E-UMTS);
FIG. 2 shows 3 modes of operation for NB-IoT;
FIG. 3 shows an example of using multi-carrier in NB-IoT communication;
FIG. 4 is a diagram illustrating an operation procedure of a user equipment and a base station during a non-contention based random access procedure;
FIG. 5 is a diagram illustrating an operation procedure of a user equipment and a base station during a contention based random access procedure;
FIG. 6 shows the concept of the embodiment for random access failure of the present invention; and
FIG. 7 is a block diagram of a communication apparatus according to an embodiment of the present invention.

### Mode for the Invention

The configuration, operation and other features of the present invention will be understood by the embodiments of the present invention described with reference to the accompanying drawings. The following embodiments are examples of applying the technical features of the present invention to a 3rd generation partnership project (3GPP) system.

Although the embodiments of the present invention are described using a long term evolution (LTE) system and a LTE-advanced (LTE-A) system in the present specification, they are purely exemplary. Therefore, the embodiments of the present invention are applicable to any other communication system corresponding to the above definition.

As stated above, the present invention relates to a random access procedure to a network supporting NB-IoT (Narrow Band Internet of Things). There are two types of random access procedure.

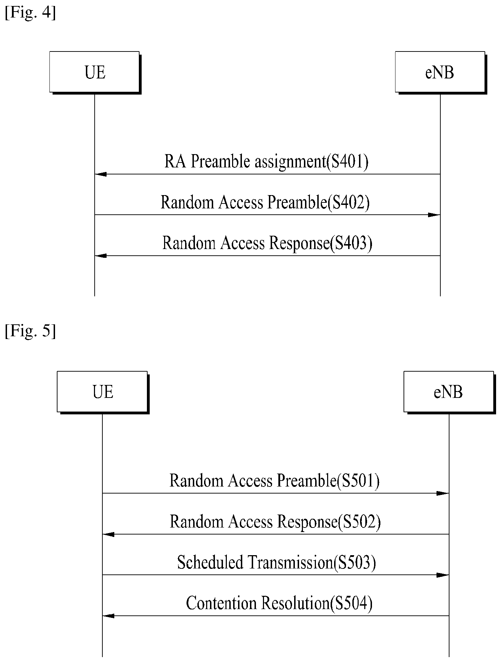

FIG. 4 is a diagram illustrating an operation procedure of a user equipment and a base station during a non-contention based random access procedure.

### (1) Random access preamble assignment

The non-contention based random access procedure can be performed for two cases, i.e., (1) when a handover procedure is performed, and (2) when requested by a command of the base station. Of course, the contention based random access procedure may also be performed for the two cases.

First of all, for non-contention based random access procedure, it is important that the user equipment receives a designated random access preamble having no possibility of contention from the base station. Examples of a method of receiving a random access preamble include a method through a handover command and a method through a PDCCH command. A random access preamble is assigned to the user equipment through the method of receiving a random access preamble (S401).

### (2) First message transmission

As described above, after receiving a random access preamble designated only for the user equipment, the user equipment transmits the preamble to the base station (S402).

### (3) Second message reception

After the user equipment transmits the random access preamble in step S402, the user equipment tries to receive its random access response within a random access response receiving window indicated through system information or handover command (S403). In more detail, the random access response can be transmitted in the form of a MAC protocol data unit (MAC PDU), and the MAC PDU can be transferred through a physical downlink shared channel (PDSCH). Also, it is preferable that the user equipment monitors a physical downlink control channel (PDCCH) to appropriately receive information transferred to the PDSCH. Namely, it is preferable that the PDCCH includes information of a user equipment which should receive the PDSCH, frequency and time information of radio resources of the PDSCH, and a transport format of the PDSCH. If the user equipment successfully receives the PDCCH transmitted thereto, the user equipment can appropriately receive a random access response transmitted to the PDSCH in accordance with the information of the PDCCH. The random access response can include a random access preamble identifier (ID) (for example, random access preamble identifier (RA-RNTI)), uplink grant indicating uplink radio resources, a temporary C-RNTI, and timing advance command (TAC) values.

As described above, the random access preamble identifier is required for the random access response to indicate whether the uplink grant, the temporary C-RNTI and the TAC values are effective for what user equipment as random access response information for one or more user equipments can be included in one random access response. In this case, it is assumed that the user equipment selects a random access preamble identifier corresponding to the random access preamble selected in step S402.

In the non-contention based random access procedure, the user equipment can terminate the random access procedure after determining that the random access procedure has been normally performed by receiving the random access response information.

FIG. 5 is a diagram illustrating an operation procedure of a user equipment and a base station during a contention based random access procedure.

### (1) First message transmission

First of all, the user equipment randomly selects one random access preamble from a set of random access preambles indicated through system information or handover command, and selects a physical RACH (PRACH) resource that can transmit the random access preamble (S501).

### (2) Second message reception

A method of receiving random access response information is similar to that of the aforementioned non-contention based random access procedure. Namely, after the user equipment transmits the random access preamble in step S402, the base station tries to receive its random access response within a random access response receiving window indicated through system information or handover command, and receives the PDSCH through corresponding random access identifier information (S502). In this case, the user equipment can receive uplink grant, a temporary C-RNTI, and timing advance command (TAC) values.

### (3) Third message transmission

If the user equipment receives its effective random access response, the user equipment respective processes information included in the random access response. Namely, the user equipment applies TAC and store a temporary C-RNTI. Also, the user equipment transmits data (i.e., third message) to the base station using UL grant (S503). The third message should include a user equipment identifier. This is because that the base station needs to identify user equipments which perform the contention based random access procedure, thereby avoiding contention later.

Two methods have been discussed to include the user equipment identifier in the third message. In the first method, if the user equipment has an effective cell identifier previously assigned from a corresponding cell before the random access procedure, the user equipment transmits its cell identifier through an uplink transport signal corresponding to the UL grant. On the other hand, if the user equipment does not have an effective cell identifier previously assigned from a corresponding cell before the random access procedure, the user equipment transmits its cell identifier including its unique identifier (for example, S-TMSI or random ID). Generally, the unique identifier is longer than the cell identifier. If the user equipment transmits data corresponding to the UL grant, the user equipment starts a contention resolution timer.

### (4) Fourth message reception

After transmitting data including its identifier through UL grant included in the random access response, the user equipment waits for a command of the base station for contention resolution. Namely, the user equipment tries to receive the PDCCH to receive a specific message (504). Two methods have been discussed to receive the PDCCH. As described above, if the third message is transmitted to correspond to the UL grant using the user equipment identifier, the user equipment tries to receive the PDCCH using its cell identifier. If the user equipment identifier is a unique identifier of the user equipment, the user equipment tries to receive the PDCCH using a temporary cell identifier included in the random access response. Afterwards, in case of the first method, if the user equipment receives the PDCCH through its cell identifier before the contention resolution timer expires, the user equipment determines that the random access procedure has been performed normally, and ends the random access procedure. In case of the second method, if the user equipment receives the PDCCH through the temporary cell identifier before the contention resolution timer expires, the user equipment identifies data transferred from the PDSCH. If the unique identifier of the user equipment is included in the data, the user equipment determines that the random access procedure has been performed normally, and ends the random access procedure.

As stated above, multiple carrier operation is supported for NB-IoT. In Rel-13 NB-IoT, a UE (i.e., NB-IoT UE) can only perform Random Access (RA) on an anchor carrier. In specific, if the UE is configured with a non-anchor carrier, it is required to perform the Random Access procedure on the anchor carrier.

To achieve access and congestion control among the multiple carries, applicant believes in a necessity for non-anchor carrier RA. Thus, one of the embodiments of the present invention starts from that the Random Access on a non-anchor carrier will be supported.

In previous Rel-13 approach, while a UE does not complete RA procedure successfully on an anchor carrier, reselection to other carrier is not necessary. In contrast, when a UE performs RA procedure on non-anchor carrier, another carrier (e.g., anchor or non-anchor) selection should be considered when the RA is unsuccessful.

In order to avoid mismatch between UE and eNB about the UE operating carrier (i.e. on which carrier the UE is operating) after RA failure, it is proposed that, when the UE fails an RA procedure, the UE fallbacks to the carrier on which the UE was operating before performing the RA procedure.

More specifically, the UE fallbacks to the anchor carrier if the RA procedure initiated when the UE is in RRC_IDLE is failed, and the UE fallbacks to the configured carrier if the RA procedure initiated when the UE is in RRC_CONNECTED is failed.

Fallback means that the UE changes the operating carrier from the carrier on which the RA procedure is performed to the carrier used before performing the RA procedure.

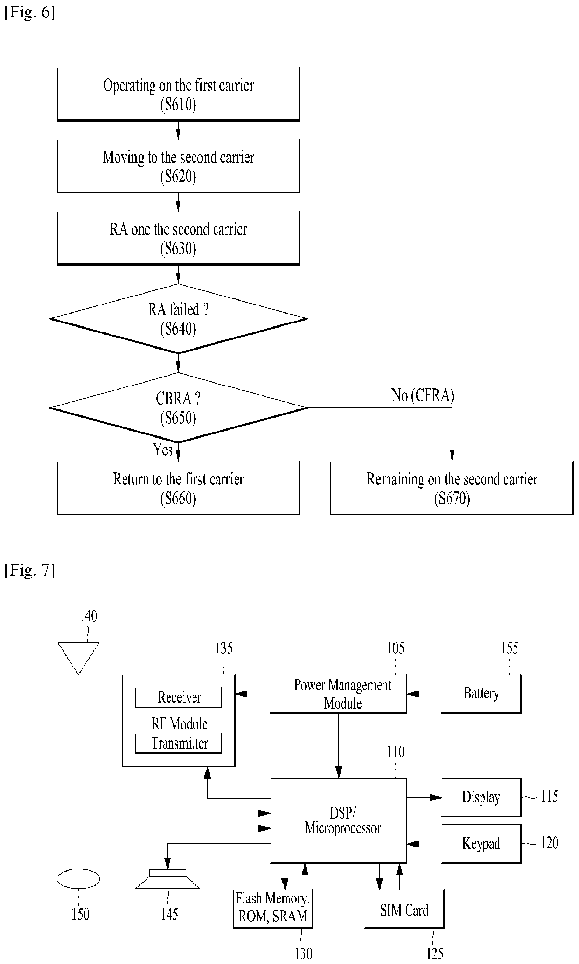

FIG. 6 shows the concept of the embodiment for random access failure of the present invention.

The UE may operate on a first carrier (S610). The carrier on which the UE is operating means that the UE monitors PDCCH transmitted from the eNB on that carrier. The carrier means a specific frequency or a frequency band.

As stated above, NB-IoT UE may perform the random access not only on the anchor carrier, but also on the non-anchor carriers. So, based on various reasons, the UE may move to a second carrier from the first carrier (S620) and perform a random access procedure on the second carrier (S630).

The random access on the second carrier can be determined as not successful, as explained above (S640). In the preferred embodiment, the UE may fallback to the first carrier (S660), when the random access procedure on the second carrier is not successful (S640), and when the random access procedure is a contention based random access (CBRA) procedure (S650).

Here, the first carrier may be an anchor carrier, if the UE is in RRC_IDLE state. And, the first carrier may be a configured carrier if the UE is in RRC_CONNECTED state.

The configured carrier can be a carrier on which the UE in RRC_CONNECTED operates.

On the other hand, if the random access procedure is a contention free random access procedure (CFRA), the second carrier may be an indicated carrier indicated by the network. Thus, the preferred embodiment of the present invention proposes the UE to remain on the second carrier (S670), when the random access procedure on the second carrier is not successful.

As explained, the UE's operation can be defined based on the UE's connection state and the type of random access procedure. Hereinafter, exemplary operation of the UE is explained in terms of the UE's state.

### Example 1: RA procedure in RRC IDLE

In RRC_IDLE, the UE searches for a carrier that has better radio quality, and camps on that carrier. This carrier is called anchor carrier. The downlink frequency and uplink frequency of the anchor carrier may be different. After camping on the anchor carrier, the UE receives system information broadcast on the anchor carrier.

From the system information, the UE acquires information about anchor carrier as well as one or more non-anchor carriers. The information about anchor carrier or non-anchor carrier includes information about PRACH resource which is used for RA procedure on the corresponding carrier.

In RRC_IDLE, when the RA procedure is triggered (e.g. by UL data arrival or reception of paging), the UE selects a carrier among the carriers whose PRACH resource are provided in the system information. During the carrier selection, the UE may consider other factors, e.g. coverage enhancement level, reception signal quality, carrier priority, carrier load status, etc.

Once a carrier is selected, the UE performs a Contention Based RA (CBRA) procedure on the selected carrier. The selected carrier is either the anchor carrier, or a non-anchor carrier. Once selected, the UE may monitor PDCCH only on the selected carrier and may not monitor PDCCH on other carriers.

Performing CBRA procedure includes the steps of behavior, e.g. transmission of RA preamble, reception of RA response, and contention resolution. All those steps are subject to failure, i.e. RA preamble transmission may fail, RAR reception may fail, and contention resolution may fail. Any failure during CBRA procedure leads to CBRA failure, and the UE may consider that the CBRA is not successful. The UE may perform multiple times of CBRA procedure before deciding CBRA failure.

When the CBRA failure on the selected carrier happens, the UE reselects the carrier on which the UE was operating before the CBRA procedure; which is the anchor carrier. In other words, when the CBRA failure on the selected carrier happens, the UE stops monitoring PDCCH on the selected carrier on which the CBRA procedure was performed, and starts monitoring PDCCH on the anchor carrier. If another CBRA procedure is triggered, the UE performs above-mentioned procedure again, i.e. carrier selection, CBRA procedure on the selected carrier, and fallback to anchor carrier if CBRA procedure fails.

If the CBRA procedure on the selected carrier is successful, the UE keeps operating on the selected carrier until the carrier is changed by other reasons. The eNB may indicate an operating carrier during CBRA procedure, in which case the UE operates on the indicated carrier after the CBRA procedure.

Another method of this embodiment is that when the CBRA failure on the selected carrier happens, the UE reselects one of a carrier among the carriers whose RACH resource is already acquired from the system information.

### Example 2: RA procedure in RRC CONNECTED

In RRC_CONNECTED, the UE operates on a carrier. Let's call it as 'configured carrier'. During RRC_CONNECTED, the UE monitors PDCCH on the configured carrier. The configured carrier may or may not be same as anchor carrier. The eNB can change the configured carrier of the UE by dedicated signaling.

In RRC_CONNECTED, the UE can perform RA procedure in two manners, i.e. Contention Based and Contention-Free.

When the Contention Based RA procedure is triggered (e.g. by UL data arrival), the UE preforms the CBRA procedure on the configured carrier. Therefore, as the carriers before and during CBRA procedure are same, there is no carrier de-synchronization problem regardless of whether the CBRA procedure is successful or not. The UE would always remain on the configured carrier.

However, when the Contention-Free RA procedure is triggered (e.g. by PDCCH order), the PDCCH order may include indication of a carrier that should be used for the CFRA procedure. The indicated carrier may be different from the configured carrier. The UE performs the CFRA procedure on the indicated carrier.

Performing CFRA procedure includes the steps of behavior, e.g. transmission of RA preamble, reception of RA response. All those steps are subject to failure, i.e. RA preamble transmission may fail, and RAR reception may fail. Any failure during CFRA procedure leads to CFRA failure, thus the UE may consider that the CFRA is not successful. The UE may perform multiple times of CFRA procedure before deciding CFRA failure.

When the CFRA failure on the indicated carrier happens, the UE reselects the carrier on which the UE was operating before the CFRA procedure; which is the configured carrier. In other words, when the CFRA failure on the indicated carrier happens, the UE stops monitoring PDCCH on the indicated carrier on which the CFRA procedure was performed, and starts monitoring PDCCH on the configured carrier.

If the CFRA procedure on the indicated carrier is successful, the UE keeps operating on the indicated carrier until the carrier is changed by other reasons. The eNB may indicate another operating carrier during CFRA procedure, in which case the UE operates on the another indicated carrier after the CFRA procedure.

Another method of this embodiment is that when the CFRA failure on the indicated carrier happens, the UE remains on the indicated carrier. In other words, if the UE receives a carrier indication on the PDCCH order, the UE reselects to the indicated carrier regardless of whether the CFRA procedure is successful or not. The UE starts to monitor PDCCH on the indicated carrier when the carrier indication is received on the PDCCH order.

FIG. 7 is a block diagram of a communication apparatus according to an embodiment of the present invention.

The apparatus shown in FIG. 7 can be a user equipment (UE) and/or eNB adapted to perform the above mechanism, but it can be any apparatus for performing the same operation.

As shown in FIG. 7, the apparatus may comprises a DSP/microprocessor (110) and RF module (transmiceiver; 135). The DSP/microprocessor (110) is electrically connected with the transciver (135) and controls it. The apparatus may further include power management module (105), battery (155), display (115), keypad (120), SIM card (125), memory device (130), speaker (145) and input device (150), based on its implementation and designer's choice.

Specifically, FIG. 7 may represent a UE comprising a receiver (135) configured to receive signal from the network, and a transmitter (135) configured to transmit signals to the network. These receiver and the transmitter can constitute the transceiver (135). The UE further comprises a processor (110) connected to the transceiver (135: receiver and transmitter).

Also, FIG. 7 may represent a network apparatus comprising a transmitter (135) configured to transmit signals to a UE and a receiver (135) configured to receive signal from the UE. These transmitter and receiver may constitute the transceiver (135). The network further comprises a processor (110) connected to the transmitter and the receiver.

It will be apparent to those skilled in the art that various modifications and variations it is intended that the present invention cover the modifications and variations of this invention provided they come within the scope of the appended claims.

The embodiments of the present invention described herein below are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment.

The term 'eNB' may be replaced with the term 'fixed station', 'Node B', 'Base Station (BS)', 'access point', 'gNB', etc.

The above-described embodiments may be implemented by various means, for example, by hardware, firmware, software, or a combination thereof.

In a hardware configuration, the method according to the embodiments of the present invention may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, or microprocessors.

In a firmware or software configuration, the method according to the embodiments of the present invention may be implemented in the form of modules, procedures, functions, etc. performing the above-described functions or operations. Software code may be stored in a memory unit and executed by a processor. The memory unit may be located at the interior or exterior of the processor and may transmit and receive data to and from the processor via various known means.

Those skilled in the art will appreciate that the present invention may be carried out in other specific ways than those set forth herein without departing from the essential characteristics of the present invention. The above embodiments are therefore to be construed in all aspects as illustrative and not restrictive. The scope of the invention should be determined by the appended claims.

### Industrial Applicability

While the above-described method has been described centering on an example applied to the 3GPP system, the present invention is applicable to a variety of wireless communication systems, e.g. IEEE system, in addition to the 3GPP system.

## Claims

1. A method for a user equipment, UE, performing a random access to a network, the method comprising:
operating on a first carrier (S610);
moving to a second carrier from the first carrier (S620);
performing a random access procedure on the second carrier (S630);
returning to the first carrier (S660), when the random access procedure on the second carrier is not successful (S640), and when the random access procedure is a contention based random access procedure (S650); and
remaining on the second carrier (S670), when the random access procedure on the second carrier is not successful (S640), and when the random access procedure is a contention free random access procedure (S650), and
wherein the first carrier is an anchor carrier based on the UE being in RRC_IDLE state.

2. The method of claim 1, wherein the anchor carrier is a carrier on which the UE receives a synchronization signal and a broadcast signal.

3. The method of claim 2, wherein the random access procedure is permitted on a non-anchor carrier.

4. The method of claim 1, wherein operating on the first carrier comprises the UE monitoring a Physical Downlink Control Channel, PDCCH, transmitted from the network.

5. The method of claim 1, wherein, based on the random access procedure being the contention free random access procedure, the second carrier is an indicated carrier indicated by the network.

6. A user equipment, UE, performing a random access to a network, the UE comprising:
a processor (110) configured to operate on a first carrier, to move to a second carrier from the first carrier, and to perform a random access procedure on the second carrier; and
a transceiver (135) connected to the processor (110) and configured to transmit and receive signals,
wherein the processor (110) is further configured to return to the first carrier, when the random access procedure on the second carrier is not successful, and when the random access procedure is a contention based random access procedure,
wherein the processor (110) is further configured to remain on the second carrier, when the random access procedure on the second carrier is not successful, and when the random access procedure is a contention free random access procedure, and
wherein the first carrier is an anchor carrier based on the UE being in RRC_IDLE state.

7. The UE of claim 6, wherein the anchor carrier is a carrier on which the UE receives a synchronization signal and a broadcast signal.

8. The UE of claim 7, wherein the random access procedure is permitted on a non-anchor carrier.

9. The UE of claim 6, wherein the processor (110) monitors a Physical Downlink Control Channel, PDCCH, transmitted from the network on the first carrier to operate on the first carrier.

10. The UE of claim 6, wherein, based on the random access procedure being the contention free random access procedure, the second carrier is an indicated carrier indicated by the network.

## Patentansprüche

1. Verfahren für ein Benutzergerät, UE, das einen wahlfreien Zugriff auf ein Netzwerk durchführt, wobei das Verfahren umfasst:
Arbeiten auf einem ersten Träger (S610);
Bewegen zu einem zweiten Träger von dem ersten Träger (S620);
Durchführen einer Zufallszugriffsprozedur auf den zweiten Träger (S630);
Zurückkehren zu dem ersten Träger (S660), wenn die Zufallszugriffsprozedur auf dem zweiten Träger nicht erfolgreich ist (S640) und wenn die Zufallszugriffsprozedur eine konkurrenzbasierte Zufallszugriffsprozedur ist (S650); und
Verbleiben auf dem zweiten Träger (S670), wenn die Zufallszugriffsprozedur auf dem zweiten Träger nicht erfolgreich ist (S640), und wenn die Zufallszugriffsprozedur eine konkurrenzfreie Zufallszugriffsprozedur ist (S650), und
wobei der erste Träger ein Ankerträger ist, der darauf basiert, dass sich das UE in Zustand RRC_IDLE befindet.

2. Verfahren nach Anspruch 1, wobei der Ankerträger ein Träger ist, auf dem das UE ein Synchronisationssignal und ein Rundfunksignal empfängt.

3. Verfahren nach Anspruch 2, wobei die Zufallszugriffsprozedur auf einem nicht Nicht-Ankerträger zulässig ist.

4. Verfahren nach Anspruch 1, wobei ein Betrieb auf dem ersten Träger ein Überwachen eines von dem Netzwerk übertragenen Physical Downlink Control Channel, PDCCH, durch das UE umfasst.

5. Verfahren nach Anspruch 1, wobei, basierend auf der Zufallszugriffsprozedur, die die konkurrenzfreie Zufallszugriffsprozedur ist, der zweite Träger ein durch das Netzwerk angezeigter Träger ist.

6. Benutzergerät, UE, das einen Zufallszugriff auf ein Netzwerk durchführt, wobei das UE Folgendes umfasst:
einen Prozessor (110), der konfiguriert ist, auf einem ersten Träger zu arbeiten, um sich von dem ersten Träger zu einem zweiten Träger zu bewegen und eine Zufallszugriffsprozedur auf dem zweiten Träger durchführt; und
einen Transceiver (135), der mit dem Prozessor (110) verbunden und konfiguriert ist, Signale zu senden und zu empfangen,
wobei der Prozessor (110) ferner konfiguriert ist, zu dem ersten Träger zurückzukehren, wenn die Zufallszugriffsprozedur auf dem zweiten Träger nicht erfolgreich ist und wenn die Zufallszugriffsprozedur eine konkurrenzbasierte Zufallszugriffsprozedur ist,
wobei der Prozessor (110) ferner konfiguriert ist, auf dem zweiten Träger zu verbleiben, wenn die Zufallszugriffsprozedur auf dem zweiten Träger nicht erfolgreich ist und wenn die Zufallszugriffsprozedur eine konkurrenzfreie Zufallszugriffsprozedur ist, und
wobei der erste Träger ein Ankerträger ist, der darauf basiert, dass sich das UE im Zustand RRC_IDLE befindet.

7. UE nach Anspruch 6, wobei der Ankerträger ein Träger ist, auf dem das UE ein Synchronisationssignal und ein Rundfunksignal empfängt.

8. UE nach Anspruch 7, wobei die Zufallszugriffsprozedur auf einem Nicht-Ankerträger zulässig ist.

9. UE nach Anspruch 6, wobei der Prozessor (110) einen Physical Downlink Control Channel, PDCCH, überwacht, der von dem Netzwerk auf dem ersten Träger übertragen wird, um auf dem ersten Träger zu arbeiten.

10. UE nach Anspruch 6, wobei, basierend darauf, dass die Zufallszugriffsprozedur die konkurrenzfreie Zufallszugriffsprozedur ist, der zweite Träger ein von dem Netzwerk angezeigter Träger ist.

## Revendications

1. Procédé pour un équipement utilisateur, UE, exécutant un accès aléatoire, le procédé consistant à :
fonctionner sur une première porteuse (S610);
se déplacer vers une seconde porteuse depuis la première porteuse (S630) ;
réaliser une procédure d'accès aléatoire sur la seconde porteuse (S630) ;
retourner à la première porteuse (S660) lorsque la procédure d'accès aléatoire sur la seconde porteuse n'a pas réussi (S640) et lorsque la procédure d'accès aléatoire est une procédure d'accès aléatoire basée sur la collision (S650) ; et
rester sur la seconde porteuse (S670) lorsque la procédure d'accès aléatoire sur la seconde porteuse n'a pas réussi (S640) et lorsque la procédure d'accès aléatoire est une procédure d'accès aléatoire basée sur la collision (S650), et
dans lequel la première porteuse est une porteuse d'ancrage basée sur le fait que l'UE est dans un état RRC_IDLE.

2. Procédé selon la revendication 1, dans lequel la porteuse d'ancrage est une porteuse sur laquelle l'UE reçoit un signal de synchronisation et un signal de diffusion.

3. Procédé selon la revendication 2, dans lequel la procédure d'accès aléatoire est permise sur une porteuse de non-ancrage.

4. Procédé selon la revendication 1, dans lequel le fonctionnement sur la première porteuse consiste à ce que l'UE surveille un canal physique de contrôle descendant, PDCCH, transmis par le réseau.

5. Procédé selon la revendication 1, dans lequel basé sur le fait que la procédure d'accès aléatoire est la procédure d'accès aléatoire exempte de collision, la seconde porteuse est une porteuse indiquée par le réseau.

6. Équipement utilisateur, UE, exécutant un accès aléatoire à un réseau, comprenant :
un processeur (110) configuré pour fonctionner sur une première porteuse, pour se déplacer vers une seconde porteuse depuis la première porteuse, et pour réaliser une procédure d'accès aléatoire sur la seconde porteuse; et
un émetteur-récepteur (135) connecté au processeur (110) et configuré pour émettre et recevoir des signaux,
dans lequel le processeur (110) est en outre configuré pour retourner à la première porteuse lorsque la procédure d'accès aléatoire sur la seconde porteuse n'a pas réussi et lorsque la procédure d'accès aléatoire est une procédure d'accès aléatoire basée sur la collision,
dans lequel le processeur (110) est en outre configuré pour rester sur la seconde porteuse lorsque la procédure d'accès aléatoire sur la seconde porteuse n'a pas réussi et lorsque la procédure d'accès aléatoire est une procédure d'accès aléatoire basée sur la collision, et
dans lequel la première porteuse est une porteuse d'ancrage basée sur le fait que l'UE est dans un état RRC_IDLE.

7. UE selon la revendication 6, dans lequel la porteuse d'ancrage est une porteuse sur laquelle l'UE reçoit un signal de synchronisation et un signal de diffusion.

8. UE selon la revendication 7, dans lequel la procédure d'accès aléatoire est permise sur une porteuse de non-ancrage.

9. UE selon la revendication 6, dans lequel le processeur (110) surveille un canal physique de contrôle descendant, PDCCH, transmis par le réseau sur la première porteuse pour fonctionner sur la première porteuse.

10. UE selon la revendication 6, dans lequel basé sur le fait que la procédure d'accès aléatoire est la procédure d'accès aléatoire exempte de collision, la seconde porteuse est une porteuse indiquée par le réseau.
